# EUROPEAN PATENT SPECIFICATION

(11) **EP 0 483 229 B1**
(45) Date of publication and mention of the grant of the patent: **22.11.1995**
(21) Application number: 90911304.5
(22) Date of filing: 23.07.1990
(51) Int. Cl.: H04J 14/08, H04J 3/24, H04J 14/02

(54) **DATA TRANSMISSION ON A NETWORK**
DATENÜBERTRAGUNG AUF EINEM NETZWERK
TRANSMISSION DE DONNEES PAR UN RESEAU

(30) Priority: 21.07.1989 GB 8916720
(43) Date of publication of application: 06.05.1992
(73) Proprietor: BRITISH TELECOMMUNICATIONS public limited company, London EC1A 7AJ (GB)
(72) Inventor: PEARSON, Ian, David 5 Coopers Road, Suffolk IP5 7SJ (GB)
(74) Representative: Semos, Robert Ernest Vickers
(86) International application number: GB9001129
(87) International publication number: WO9101603

(56) References cited:
- EP-A- 0 295 857
- EP-A- 0 313 389
- DE-A- 3 211 966
- Journal of Lightwave Technology, Volume LT-3, No. 3, June 1985, IEEE, (New York, US), T. HERMES et al.: "LOCNET - a Local area Network using Optical Switching", pages 467-471
- IBM Technical Disclosure Bulletin, Volume 32, No. 4B, September 1989, (Armonk, N.Y. US), "Passive Optical star with a Tunable Receiver for Hybrid Access Control and Overflow Prevention", pages 331-337

## Description

The present invention relates to the transmission of packets or cells of data on a network.

In most known cell based communication systems each cell is divided into a certain number of bytes forming a header which contains address and other system information, followed by a number of bytes or part-bytes in which a data source writes the information to be transmitted. Although the source is unconstrained as to the nature of the data it writes, the format used for writing the data has to match that used in the header. For example, the bit rate and line codes used in writing the data have to correspond to those used in the header. The format of the header in turn is necessarily fixed since it must be capable of being read at any node in the network.

A packet switching system is known from EP-A-0313389 in which high speed data packets are switched through an optical switch by means of a header comprising respective control wavelengths. In this case, although the format of the data in the packet does not match that of the header, it will be understood that both formats are fixed (in the sense of the present invention) and the system is thus limited to handling data input in the same predetermined format.

The present invention provides a system for transmitting data cells from a transmitter to a receiver via a network, in which each cell comprises a fixed format header containing at least address or routing information, and characterised in that each cell is constituted solely by said fixed format header and by a free format time slice of predetermined duration in which the user has complete freedom to choose any form and format of signalling including at least analogue and digital formats and, if digital, the number of bits sent and the data rate, the duration of the time slice being independent of the form and format of the signalling and, if digital, the data rate, the transmitter includes a data source arranged to fill the time slice with data for transmission, and a transmission unit (TU) transparent to the data in the time slice and arranged to attach the fixed format header to the time slice and to transmit the cell onto the network.

The present invention provides a cell based communications system which departs radically from the above known systems and offers many advantages. Instead of using cells of unitary format, the present invention effectively decouples the formats of the header and the information bearing portion of each cell. The fixed format header is followed by, or associated with, a time slice which the data source is free to fill in any manner appropriate to the information being carried. Thus, the time slice may be filled with a digital signal of any bit rate, with an analogue signal, or just with a region of the optical spectrum containing, for example, a group of discrete wavelengths. The format, information rate, and meaning of the information field are limited only by the requirements of the receiver and the system bandwidth. The flexibility of the system is such that, for example, a network user having the capability to transmit at a higher data rate than that used for the header is free to use that higher rate to put data onto the network, and can squeeze much more information into the cell than would be possible in a conventional system which limits the data rate to that of the header. The system offers savings in the cost of transmission equipment and pre-transmission equipment such as codecs.

The system of the present invention which uses time slices with attached addresses has been termed an addressed time slice (ATS) transport system, the header being attached in the sense of being associated with the time slice in a signalling channel.

Preferably, the network includes routing means arranged to read address information from the header, and to route the cell accordingly, the routing means being transparent to the data in the time slice.

Preferably, the network is an optical network, and the routing means is an optical switch arranged to read the header in the optical domain.

The system of the present invention may be used with wavelength division multiplexing (WDM). In this case preferably the ATS cell comprises a single wavelength header and a time slice including at least one channel at a different respective wavelength.

Preferably the cell comprises a plural wavelength header and a time slice including at least one channel at a different respective wavelength.

A plurality of cells may share the same time slice with their headers multiplexed on the single wavelength or on the plurality of wavelengths, as the case may be.

The system of the present invention may be extended by varying the size of the time slice at the different hierarchical levels of the network. In this case preferably a second level cell is formed comprising a second-level header containing at least second level address or routing information and a second level time slice comprising a plurality of first level ATS cells. This arrangement may allow a higher throughput where there would otherwise be a bottleneck at the routing stage.

A system in accordance with the present invention will now be described in detail with reference to the figures of the accompanying drawings in which:
Figure 1 is a diagram of a network;
Figure 2 is a diagram of an ATS cell;
Figure 3 is a diagram of a second level ATS cell; and
Figure 4 is a diagram of a network with local exchanges.

A data communication system comprises a transmitter 1 and receivers 2, 3 linked to the transmitter 1 via an optical network 4. Although for clarity a simple network with a single branch and two receivers is shown, in practice the present invention is applicable to a wide range of network topologies and typically data will be routed to one or more of a large number of receivers. The network includes an optical switch 5 arranged to route data to a selected one of the receivers 2,3.

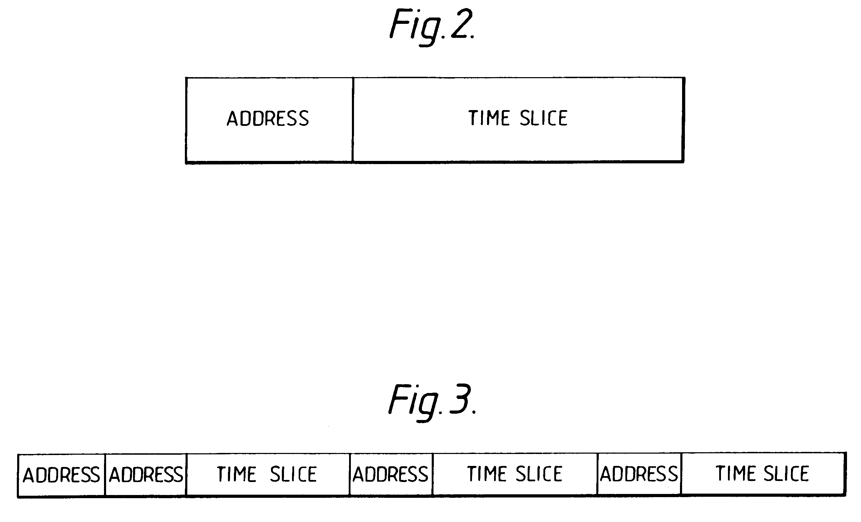

The transmitter 1 transmits data onto the network in addressed time slice (ATS) cells. The cell format shown in Figure 2 comprises a header 6 which carries header information in the form of address information only and a time slice 7. The time slice 7 which is of predetermined duration but is otherwise of unfixed format is filled with data from the data source under control of a signal from a transmission unit TU which is transparent to the data from the data source. The data may, for example, take the form of an amplitude modulated analogue signal. To this signal filling the time slice 7 the transmission unit TU adds an address 5 which is of a fixed format for a given network. Although in the present example the header contains address information only, in general additional information may be included in the header when needed for a particular system. In the present example, the header is 4 bytes long and is encoded at a bit rate of substantially 155 Mbit/s. The ATS cell formed in this manner is transmitted onto the network and is received by the switch 5. The switch 5 reads the header and directs the cell to one of the receivers 2,3 accordingly. The data in the time slice is not read at the switch 5 and is transmitted intact.

At the receiver 2, 3 the header 5 is stripped off and the data in the time slice 6 decoded in a manner appropriate to the method of encoding used. In the present example, using analogue encoding, a simple photoelectric cell suffices to convert the encoded data to an electrical signal suitable for further processing as appropriate.

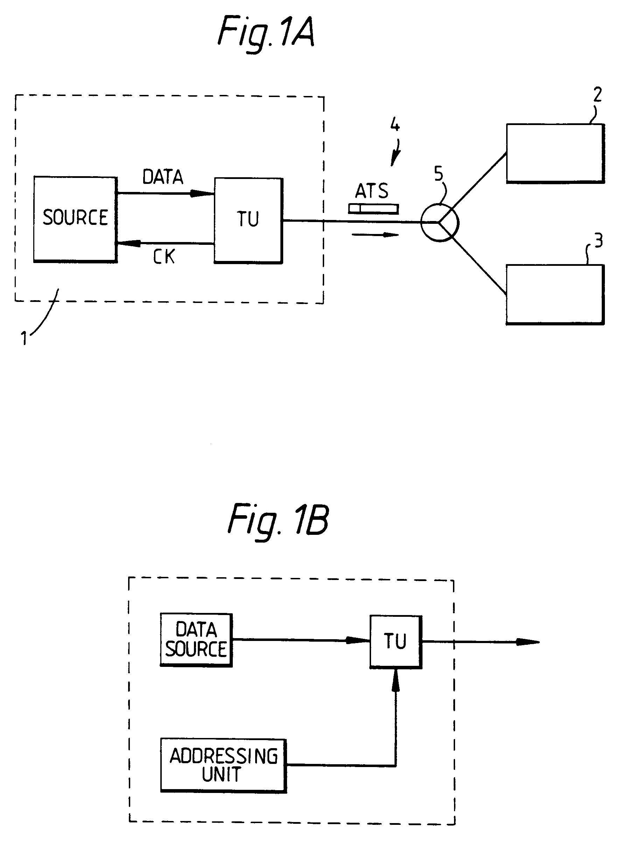

Figure 1B shows an alternative arrangement for the transmitter 1 in which separate sources are provided for the data and header information and the complete ATS cells assembled at the transmission unit TU.

The system may be extended hierarchically by forming higher level ATS cells comprising a header with address information appropriate to the particular level and a time slice filled with a number of lower level cells. Figure 3, for example, shows a second level cell formed by a header containing a second level address and a time slice filled with three first level cells.

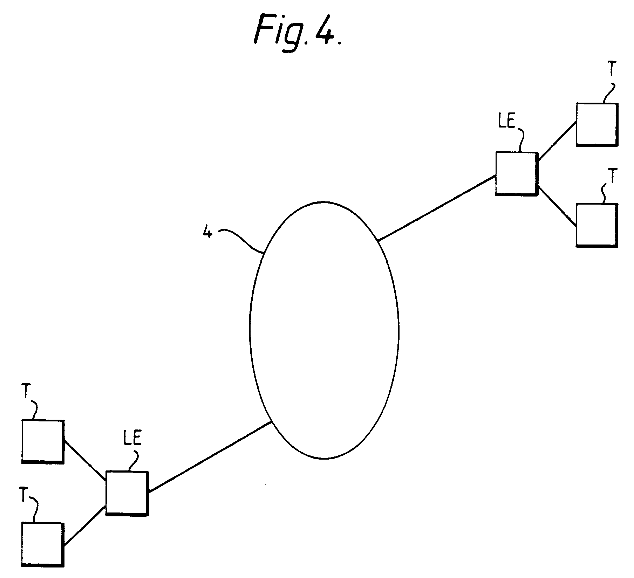

In Figure 4, when an ATS terminal T (comprising a transmitter 1 and a receiver 2) wants to make a call it sends a first cell to a local exchange LE (sometimes referred to as a head-end) intermediate the terminal T and the main network 4. This cell contains the information necessary for the local exchange LE to set up the call, and is sent at a basic data rate of 34 Mbit/s. Part of the information in this first cell declares the data rate that the terminal will use for further headers (either for the call duration or for all future calls). The local exchange LE will regenerate the headers at a network header rate of 565 Mbit/s for onward transmission on the network 4. If the destination terminal T does not operate at this header rate then the remote local exchange LE will convert down to the required rate. Thus smooth network evolution is possible, slow terminals can function at the basic rate, and the network header rate can be changed without affecting the terminals.

Terminals can be arranged to respond to a polling cell issued by a local exchange by returning a cell at basic data rate, even though such a terminal is designed for high speed normal transmission of data. In this way the local exchange can process all returning cells at the known basic data rate regardless of the normal operating rate of a terminal which can be one of a number of data rates.

Whereas in the above described system the header information is in the form of address information, it will be appreciated that it can alternatively be in the form of routing information. Furthermore, the header information may include some control information which may comprise a 1 bit flag to indicate whether the time slice needs to be treated transparently. Instead of the header including such an indication, the first cell can contain a field, which again may be a single bit, to indicate this requirement.

Whereas in the described system the header is attached to the front of the data in the time slice in the same transmission channel (wavelength), the header may be provided ("attached") at a wavelength different from that of the data of the time slice. This enables a plurality of cells to share the same time slice with their headers on a common signalling channel, and there can be a respective signalling channel for different signalling rates, e.g. 34 Mbit/s, 140 Mbit/s or 565 Mbit/s.

An advantage of using a common channel for the headers is that the system can handle ATM (asynchronous transfer mode) packets and copy the ATM header into the common channel.

## Claims

1. A system for transmitting data cells from a transmitter (1) to a receiver (2 or 3) via a network (4), in which each cell comprises a fixed format header (6) containing at least address or routing information, and characterised in that each cell is constituted solely by said fixed format header and by a free format time slice (7) of predetermined duration in which the user has complete freedom to choose any form and format of signalling including at least analogue and digital formats and, if digital, the number of bits sent and the data rate, the duration of the time slice being independent of the form and format of the signalling and, if digital, the data rate, the transmitter includes a data source arranged to fill the time slice with data for transmission, and a transmission unit (TU) transparent to the data in the time slice and arranged to attach the fixed format header to the time slice and to transmit the cell onto the network.

2. A system according to claim 1, in which the network (4) includes routing means (5) arranged to read information from the fixed format header (6), and to route the cell accordingly, the routing means being transparent to the data in the the time slice.

3. A system according to claim 2, in which the network (4) is an optical network and the routing means (5) is an optical switch arranged to read the header (6) in the optical domain.

4. A system according to claim 3, in which the cell comprises a single wavelength header (6) and a time slice (7) including at least one channel at a different respective wavelength.

5. A system according to claim 3, in which the cell comprises a plural wavelength header (6) and a time slice (7) including at least one channel at a different respective wavelength.

6. A system according to claim 4 or claim 5, in which a plurality of cells share the same time slice with their headers multiplexed on the single wavelength, or on the plurality of wavelengths, as the case may be.

7. A system according to any one of the preceding claims, in which first level cells are formed, the fixed format headers of the first level cells containing at least first level address or routing information, and in which a second level cell is formed comprising a second level header containing at least second level address or routing information, and a second level time slice comprising a plurality of the first level cells.

## Patentansprüche

1. System zum Übertragen von Datenzellen von einem Sender (1) zu einem Empfänger (2 oder 3) über ein Netzwerk (4), in dem jede Zelle einen festgelegten Formatkennsatz (6) enthält, der zumindest eine Adreß- oder Leitweginformation aufweist,
dadurch gekennzeichnet, daß
jede Zelle nur durch den festgelegten Formatkennsatz und durch eine freie Formatzeitscheibe (7) einer vorbestimmten Dauer gebildet ist, in der der Benutzer eine freie Auswahl aus jeder Signalisierungsform und jedem Signalisierungsformat besitzt, enthaltend zumindest analoge und digitale Formate und, sofern digital, die Anzahl der gesendeten Bits und die Datenrate, wobei die Dauer der Zeitscheibe unabhängig von der Signalisierungsform und dem Signalisierungsformat ist und, sofern digital, die Datenrate, der Sender eine Datenquelle zum Füllen der Zeitscheibe mit Übertragungsdaten enthält und eine Sendeeinheit (TU) vorgesehen ist, die für die Daten in der Zeitscheibe transparent ist, den festgelegten Formatkennsatz an die Zeitscheibe anhängen und die Zelle auf das Netzwerk übertragen kann.

2. System nach Anspruch 1, in dem das Netzwerk (4) Leitwegmittel (5) enthält, die Informationen aus dem festgelegten Formatkennsatz (6) lesen und die Zelle entsprechend führen kann, wobei die Leitwegmittel betreffend den Daten in dem Zeitschlitz transparent sind.

3. System nach Anspruch 2, in dem das Netzwerk (4) ein optisches Netzwerk ist und die Leitwegmittel (5) aus einem optischen Schalter bestehen, welcher den Kennsatz (6) im optischen Bereich lesen kann.

4. System nach Anspruch 3, in dem die Zelle einen einzelnen Wellenlängenkennsatz (6) und eine Zeitscheibe (7) mit zumindest einem Kanal mit einer unterschiedlichen entsprechenden Wellenlänge enthält.

5. System nach Anspruch 3, in dem die Zelle mehrere Wellenlängenkennsätze (6) und eine Zeitscheibe (7) enthält, mit zumindest einem Kanal einer unterschiedlichen, entsprechenden Wellenlänge.

6. System nach Anspruch 4 oder 5, in dem sich mehrere Zellen den gleichen Zeitschlitz teilen, wobei ihre Kennsätze auf die einzelne Wellenlänge oder auf mehrere Wellenlängen multiplext sind, je nach Bedarf.

7. System nach irgendeinem der vorangehenden Ansprüche, in dem Erstniveauzellen gebildet sind, deren festgelegte Formatkennsätze zumindest Erstniveauadressen oder Erstniveauleitweginformationen enthalten und in dem Zweitniveauzellen vorgesehen sind, mit einem Zweitniveaukennsatz, der zumindest Zweitniveauadreß- oder -leitweginformationen enthält, wobei ein Zweitniveauzeitschlitz vorgesehen ist, der mehrere Erstniveauzellen enthält.

## Revendications

1. Système destiné à transmettre des éléments de données à partir d'un émetteur (1) et un récepteur (2 ou 3) par l'intermédiaire d'un réseau (4), dans lequel chaque élément est constitué d'un en-tête à format fixe (6) contenant au moins des informations d'adresse ou d'acheminement, et caractérisé en ce que chaque élément est constitué uniquement dudit en-tête à format fixe et d'une tranche de temps à format libre (7) de durée prédéterminée dans laquelle l'utilisateur a une liberté complète pour choisir toute forme et format de transmission de signaux comprenant au moins des formats analogiques et numériques et, s'il est numérique, le nombre de bits envoyés et le débit des données, la durée de la tranche de temps étant indépendante de la forme et du format de la transmission de signaux et, s'il est numérique, le débit des données, l'émetteur comprend une source de données agencée de façon à remplir la tranche de temps avec des données destinées à la transmission et une unité de transmission (TU) transparente pour les données qui sont dans la tranche de temps et agencée pour rattacher l'en-tête à format fixe à la tranche de temps et pour émettre l'élément sur le réseau.

2. Système selon la revendication 1, dans lequel le réseau (4) comprend un moyen d'acheminement (5) agencé pour lire des informations à partir de l'en-tête à format fixe (6) et pour acheminer l'élément en conséquence, l'élément d'acheminement étant transparent pour les données dans la tranche de temps.

3. Système selon la revendication 2, dans lequel le réseau (4) est un réseau optique et le moyen d'acheminement (5) est un commutateur optique agencé pour lire l'en-tête (6) dans le domaine optique.

4. Système selon la revendication 3, dans lequel l'élément est constitué d'un en-tête à longueur d'onde unique (6) et d'une tranche de temps (7) comprenant au moins une voie sur une longueur d'onde respective différente.

5. Système selon la revendication 3, dans lequel l'élément est constitué d'un en-tête à plusieurs longueurs d'onde (6) et d'une tranche de temps (7) comprenant au moins une voie sur une longueur d'onde respective différente.

6. Système selon la revendication 4 ou la revendication 5, dans lequel une pluralité d'éléments partage la même tranche de temps, leurs en-têtes étant multiplexés sur la longueur d'onde unique ou sur la pluralité de longueurs d'onde, suivant le cas.

7. Système selon l'une quelconque des revendications précédentes, dans lequel des éléments de premier niveau sont formés, les en-têtes à format fixe des éléments de premier niveau contenant au moins des informations d'adresse ou d'acheminement de premier niveau et dans lesquels un élément de second niveau est formé, lequel comprend un en-tête de second niveau contenant au moins des informations d'adresse ou d'acheminement de second niveau et une tranche de temps de second niveau comprenant une pluralité des éléments de premier niveau.
